# EUROPEAN PATENT SPECIFICATION

(11) **EP 2 494 561 B1**
(45) Date of publication and mention of the grant of the patent: **12.01.2022**
(21) Application number: 10830245.6
(22) Date of filing: 01.11.2010
(51) Int. Cl.: H01B 9/02, E21B 17/00, F16L 53/00

(54) **INTEGRATED HIGH POWER UMBILICAL**
INTEGRIERTE HOCHLEISTUNGS-ZUFUHRLEITUNG
CÂBLE OMBILICAL HAUTE PUISSANCE INTÉGRÉ

(30) Priority: 30.10.2009 NO 20093260
(43) Date of publication of application: 05.09.2012
(60) Divisional application: 17208066.5
(73) Proprietor: Aker Solutions AS, 1325 Lysaker (NO)
(72) Inventor: FJELLNER, Arve, N-3060 Svelvik (NO); HEGGDAL, Ole, A., N-1475 Finstadjordet (NO)
(74) Representative: Protector IP AS
(86) International application number: PCT/NO2010/000395
(87) International publication number: WO 2011/059337

(56) References cited:
- EP-A2- 1 507 269
- WO-A1-2004/006272
- WO-A1-2008/075964
- WO-A1-2009/128725
- WO-A1-2009/128725
- WO-A2-2008/008091
- CA-A2- 1 213 929
- JP-A- 2007 073 519
- NO-B1- 320 972
- NO-B1- 323 941
- US-A- 5 451 718
- US-A1- 2004 109 651
- US-A1- 2005 123 254
- US-A1- 2006 137 894
- US-A1- 2007 044 992
- US-A1- 2007 044 992
- US-B1- 6 417 457
- None

## Description

The present invention relates to an integrated power umbilical, including a number of power cables for transfer of large amounts of electric power/energy, filler material in the form of stiff, elongate plastic elements/profile elements located at least partially around and between the power cables, and that are collectively gathered into a twisted bundle by means of a laying and closing operation, and a protective sheath that encapsulates the power cables and the filler material.

A power umbilical of similar nature is known from WO 2009/128725 A1. Other examples of relevant prior art are known from US 2007/044992 A1, JP 2007 073519 A, EP 1 507 269 A2, NO 320 972 B1 and US 6,417,457 B1.

Initially, the basis for the present invention was to arrive at a mechanically protected power cable which was especially prepared as a DEH cable (Direct Electric Heating) and designed to be deployed into the sea. Such DEH cables are used to heat pipelines transporting produced hydrocarbons in order to prevent hydratization. The DEH cable can for example be strapped securely to the pipeline, a so-called "Piggyback" solution. The DEH cable constitutes one of the conductors and the pipeline itself constitutes the other conductor in the heating system. Such a heating system is disclosed and described in closer detail in NO 323516.

It is a well known matter that when alternating current (AC) is supplied in a conductor, capacitance between the metallic conductor and the environment (remote ground) will arise. The capacitive AC current that arises is called charging currents.

Traditionally, such high voltage power cables have been designed with cable armoring and cable mantles, or what is called a screen. The screen is present to take care of and drain away the capacitive currents that arise when these high voltage cables are in operation and transfer large amounts of electric energy/power. This is now solved in a different way and is developed in connection with existing power umbilicals. The existing power umbilicals inherently have the abovementioned mechanical protection, namely as a filler material in the form of stiff, elongate plastic elements/profile elements.

Why a need to solve the screening in a different way exists, is inter alia reasoned as follows. For a cable extending from the seabed and up to a floating vessel, the cable needs to pass through a dynamic zone, normally in the sea surface area. A cable that operates in the dynamic zone is imparted undesired movements (by waves, wind, currents, etc.) that over time give rise to fatigue, and particularly in the mentioned cable mantle which is designed to take care of the capacitive currents. When the cable is of heavy gauge, and the mantle is located far from the center line of the cable, the mantle in particular is subjected to fatigue damage and subsequent rupture in the dynamic zone. Thus, it has been greatly desired to find a replacement for this cable mantling, which normally has been a thick foil of copper or other suitable metallic material.

In some way or another, the capacitive currents that occur within the sea cables have to be drained off to the surrounding seawater in order to limit axial capacitive currents through the transverse cross section of the cable and the voltage built up along the outer sheath.

Surprisingly it has turned out that the described profile elements and the outer sheath of the umbilical can be made of a material that has good semiconducting properties and can be taken in use with the present power umbilical. Together with seawater in the cross section, they will together conduct current along the umbilical.

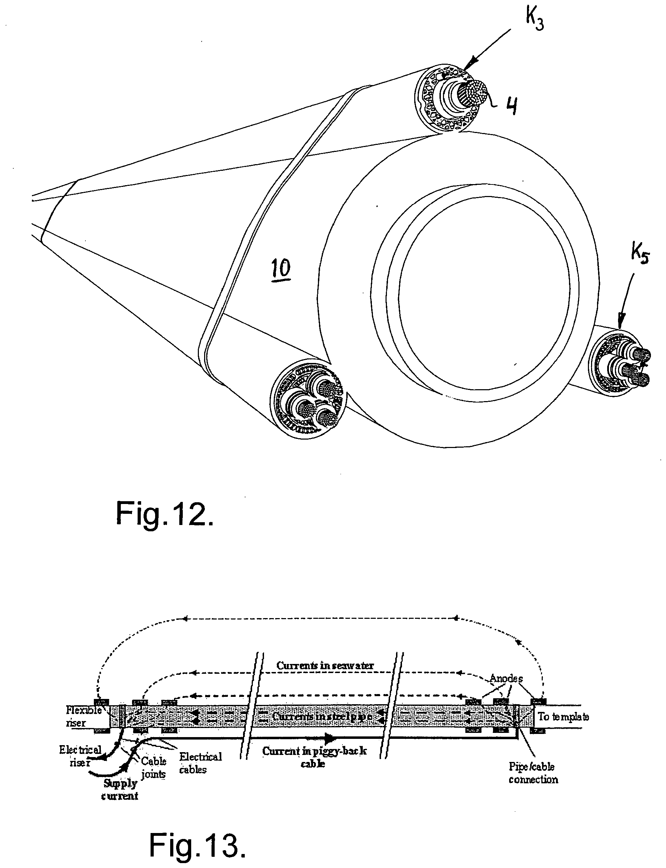

Transfer of current between the pipe and the seawater takes place via anodes and the current in the seawater flows in parallel with the pipe. The length of the transfer zone is given by physical laws and is normally 50m for 60Hz application. See fig. 13. Complex electromagnetic calculations are necessary in order to determine the current distribution between the pipe and the seawater. These calculations are connected to physical laws as "neighboring effect" and "skin effect".

Thus, according to the present invention, there is an integrated power umbilical as defined in claim 1.

It is, however, to be mentioned that the power umbilical according to the present invention can be supplied in many variants and embodiments that are especially adapted to the specific field of use of the umbilical. The common denominator for them all is that they need to have good ability to dissipate or drain away capacitive currents without the use of a metallic screen, as traditionally done. This good ability to drain away capacitive currents takes place, inter alia, through the use of the extruded profile elements that both have the good capacity to create mechanical protection for a current transferring cable and simultaneously act as a semiconductor that contribute to drain off capacitive currents.

In addition, the integrated power umbilical can be further processed in order to increase the dissipation of capacitive currents. This primarily takes place in that radially extending channels are provided through the outer sheath of the umbilical and the hollow, extruded profile elements so that the seawater present within the profile elements and the radially extending holes, or apertures, by themselves form communication routes for drainage, or dissipation, of capacitive currents.

As a further option, one may provide a fibre optics conductor to the power umbilical for use to monitor the condition of the power umbilical on a continuous basis. By too excessive heat development, the fibre optics conductor will receive a temperature increase and this, in turn, provides a signal to a monitoring station that takes measures in order to stop the current.

News and advantageous features of the cables are:
- The cable has higher efficiency than other cables due to lower energy losses
- Use of semiconductive cables in power umbilicals (with control functions)
- Use of this cable design in dynamic power umbilicals provides longer life time against fatigue
- Use of this cable design in dynamic power umbilicals enables sturdy deepsea solutions
- Use of elongate metallic elements in order to drain out capacitive currents along the length of the umbilical
- Use of semiconductive axial profiles in order to obtain contact between single-phase or three-phase high power cables
- Uses the profiles as additional protection for the cables and as axial armoring

With the new cable the following are achieved:
o Less complicated cable
o Less effect loss
o Sturdy and impact resistant cable
o Less inductive loss (10-20%) in the cable
o Less heat generation in I-pipes (dynamic applications)
o Reduced umbilical diameter and weight
o Longer lengths without joints or splices
o Lower costs
o Simpler installation
o Significant improved fatigue properties
o Usable for all voltage intervals
o Cable transverse cross section up to 2000mm²
o Design life span 30 years

Thus, this integrated power umbilical includes high voltage power cables without the traditional armoring and screening. Umbilicals use cables with semiconductive outer jacket only. The capacitive currents are drained out through the outer jacket of the cable and conducted out to the sea. The capacitive currents are eliminated by contact with each other along their length.

Lack of contact with seawater/ground will probably result in immediate consume of and melting of the semiconductive jacket. Further, semiconductive cables omit steel armoring or screen, but having stiff, elongate plastic elements for static and dynamic applications, have never been used previously. This solution is applicable for long static cables/umbilicals and short dynamic cables/umbilicals.

Preferably, the electric power cables, the filler material and the at least one electric conductor can be SZ laid and closed, i.e. alternately laid and closed by continuously alternating direction, in the entire or part of the longitudinal extension of the power umbilical, combined with that the SZ laid and closed bundle is kept fixed substantially torsion stiff by the protective sheath. As an alternative, the integrated power umbilical can be laid and closed in the traditional way into a helix having a relatively long laying length.

In the present invention, both at least one of the stiff, elongate plastic elements and the protective outer sheath are made of a semiconducting material, for example carbon containing polyethylene (PE), polyvinylchloride (PVC), polypropylene (PP) and acrylonitrile butadiene styrene (ABS).

The stiff, elongate plastic elements includes longitudinally extending channels for receipt of seawater, and the protective outer sheath includes substantially radially extending channels that communicate with the longitudinally extending channels, said seawater forming a semiconductor to transport away, or dissipate, capacitive currents generated in the power umbilical.

In one embodiment, at least one fibre optics conductor can be arranged in the power umbilical, which fibre optics conductor is able to monitor the condition of the power umbilical on a continuous basis, where a rupture will generate a warning signal.

The stiff, elongate plastic elements have channels in the form of apertures holes, slits or similar such that the seawater is able to transport away, or dissipate, the capacitive currents to the surrounding seawater.

In another embodiment, or supplementary, the electric high power cables can be three-phase cables, where the three-phase cables are arranged in a triangle within the transverse cross section thereof, that are either in contact with each other or with the semiconductive profiles.

In a more complex embodiment the power umbilical can include electric wires and/or fibre optics conductors which also are laid and closed into a SZ configuration and are located internal of the outer sheath, alternatively laid and closed in the traditional way.

In addition, it may include at least one load carrying element that is predetermined located in the transverse cross section of the power umbilical, where the element(s) also is(are) laid and closed in a SZ configuration, alternatively laid and closed in the traditional way.

The umbilical may also include an anti rotation band, or strength band, or a tape, which is helically winded about the bundle just internal of the protective sheath. Alternatively, the strength band, or the tape, is helically winded around the bundle in two or more layers, laid and closed in opposite directions.

In possible embodiments, the load carrying elements can be light weight rods of composite material having embedded carbon fibres, so-called carbon fibre rods, and/or steel threads, steel wire, and/or fibre rope and/or polyester rope.

In particular cases, the power umbilical can include at least one fluid pipe in its transverse cross section, which pipe can be made metal and/or plastic material laid and closed in the same configuration as the other elements.

The unique dynamic umbilical design of the applicant makes the use of this technology possible since the cables are carefully protected by the filler material in the form of profiled elongate channel elements. Without the use of surrounding elongate plastic elements/plastic profiles, the cables will be too weak regarding installation loads and operational strain and stress. The cables have a simplified design. Mechanical protection and structural strength are transferred to the umbilical structure or design. The axial strength is carried by external load carrying elements integrated in the transverse cross section. The design will therefore not require any additional water barrier. The semiconducting materials are new and the materials are tested with excellent results. The semiconductive materials are also waterproof up to 90°C over 20 years. Longer operations are not tested. For normal power transfer applications a designed life time of 30 years is foreseen.

Thus, it is to be understood, in accordance with what is described above, that the following alternatives have come up, which are reflected in the claims, to conduct or direct the capacitive currents out into the sea:
- conduct the capacitive current along the cable internally of the umbilical via a metallic electric conductor,
- conduct the capacitive current through the elongate plastic elements of the umbilical and outer sheath by using electric semiconductive plastic material in the plastic elements and/or sheath to drain out the currents from the inside,
- make the plastic elements and the sheath open by holes and slits such that the water can transport the currents out and into the seawater,
- three-phase cables are arranged in a triangle or in contact with each other or with the semiconductive plastic elements.

It is to be understood that it will be possible to combine one or more of the alternatives indicated above.

Other and further objects, features and advantages will appear from the following description of preferred embodiments of the invention, which is given for the purpose of description, and given in context with the appended drawings where:
Fig. 1 shows a transverse cross sectional view through a dynamic power umbilical, which also is representative for different power umbilicals of this nature,
Fig. 2 shows an alternative transverse cross sectional view through a power umbilical, which also is representative for other power umbilicals of this nature,
Fig. 3 shows a one-conductor power umbilical which is in particular prepared as a DEH cable (Direct Electric Heating),
Fig. 4 shows a one-conductor power umbilical in similarity with that shown in fig. 3, which also includes load carrying elements in the form of carbon fibre rods,
Fig. 5 shows a three-conductor DEH power umbilical,
Fig. 6 shows a two-conductor dynamic DEH umbilical having a large number of carbon fibre rods designed for particularly deep waters,
Fig. 7 shows a combined two-conductor dynamic DEH umbilical and sixconductor high voltage cable for subsea equipment and that includes carbon fibre rods,
Fig. 8 shows a twin-conductor dynamic DEH umbilical including weight elements,
Fig. 9 shows a "piggyback" umbilical on a production pipe,
Fig. 10 shows schematically a transverse cross section through a DEH umbilical having radial extending water channel Fig. 11 shows schematically current and voltage diagrams for different distances between the water channels in the longitudinal direction of the umbilical and without any fibre optics conductor present in the cross section,
Fig. 12 shows a variant of the piggyback umbilical shown in fig. 9, and
Fig. 13 shows schematically the electric current distribution in a DEH system.

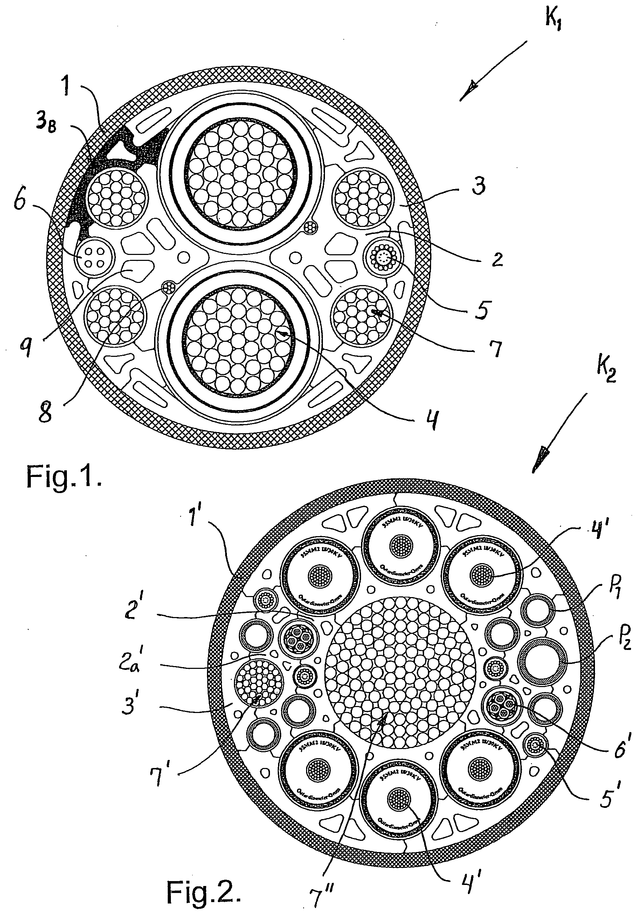

Fig.1-13 are not covered by the scope of claims and merely show some aspects thereof.

In figure 1, the power umbilical K₁, which in general description is named K, is basically constructed of the following elements: a bundle of elongate elements consisting of inner and outer channel elements 2, 3, power cables 4 to transfer large amounts of electric power/energy, fibre optics conductors 5 and load carrying elements 7, that are laid and closed together into said bundle. In addition, a filler material 6 that balances for the fibre optics cable 5 is indicated. The laying and closing is either SZ or traditional helical laying and closing. The outer channel elements 3 can for example be made of polyvinyl chloride (PVC) and the inner channel elements 2 of semiconducting material. The PVC material needs a mix with a different substance in order to make it semiconductive, for example intermixture of carbon. The power cables 4 can have a semiconducting jacket of polyethylene. The load carrying elements 7 can be in the form of steel wires, alternatively carbon rods, which are twisted into bundles. It is further to be understood that strictly one of the channel elements 2, 3 only needs to be of semiconducting material, while the remaining channel elements 2, 3 can be made of traditional PVC. In fig. 1 the black channel element 3_{B} for example, can represent the semiconductive channel element. The fibre optics conductor 5, made up by one or more optical fibre threads or filaments, are provided to monitor temperature changes or changes in elongation of the threads and then be able to signalize errors in the umbilical K. Other suitable material can for example be PP or ABS.

In addition, the power umbilical K 2. includes at least one metallic electric conductor, in figure 1 given the reference number 8, which is arranged in the cross section of the power umbilical K and extends in the longitudinal direction of the power umbilical K. The conductor or conductors 8 are located separate from and external of the power cables 4. The at least one conductor 8 is, as mentioned, able to drain away capacitive currents that arise in the power umbilical K when the power cable 4 conducts large amounts of electric energy/power.

The laid and closed bundle can optionally be kept together and in place by a strength band. An outer sheath or jacket 1, for example of polyethylene PE, is extruded onto the bundle. Polyethylene with addition of carbon is considered as semiconductive. As mentioned, the cross section can also include fluid pipes (not shown) in some embodiments or variants.

The inner and outer channel elements 2, 3 are laying at least partly around and between the electric cables 4 and are typically made as rigid, elongate, continuous elements of plastic material such as PVC. The electric cables 4, the possible wires/fibre optics conductors 5, the filler material 6 and the channel elements 2, 3 and the at least one load carrying element 7, are as mentioned alternating laid and closed, i.e. having steadily changing direction, in the entire or part of the longitudinal extension of the power umbilical, alternatively continuously helical. In addition, the laid and closed bundle is kept substantially torsional stiff by the protective sheath 1, optionally by the addition of a strength band that is helically wound around the bundle immediate inside the protective sheath 1.

As mentioned, the rigid elongate plastic elements 2, 3 are made of semiconducting plastic material. As mentioned, also the protective jacket 1 is made of semiconductive material.

The rigid elongate profile elements 2, 3 include longitudinally extending channels 9 that communicate with radial extending holes, slits or similar in the profile elements 2, 3 and through the protective jacket 1 such that the water that fills the channels 9 and the holes are able to transport away the capacitive currents into the surrounding sea water.

The electric power cables 4 can in turn be three-phase cables which in the cross section thereof can be arranged in a triangle, which either are in contact with each other or with the semiconducting plastic profiles 2, 3.

As an illustrating example of the dimensions in question, without thereby being limiting, the cable can have a transversal cross section of 2000mm². Designed lifetime is 30 years. It is further to be understood that ordinary electric wires for control functions, can in addition possibly be included in all embodiments and variants, all according to actual needs.

Figure 2 shows a power umbilical K₂, which in turn is basically constructed of the following elements: a bundle of elongate elements consisting of inner, intermediate and outer channel elements 2', 2a', 3', power cables 4' to transfer large amounts of electric power/energy, fibre optics conductors 5' and load carrying elements 7', 7", that are laid and closed together into said bundle. In addition, smaller and larger steel pipes P₁, P₂ to transfer fluids are indicated. The laying and closing is either SZ or traditional helical laying and closing. The outer channel elements 3' can for example be made of polyvinyl chloride (PVC) and the inner channel elements 2' of semiconducting material. The power cables 4' can have a semiconducting jacket of polyethylene. The load carrying elements 7', 7" can be in the form of steel wires, which are twisted into bundles. Here one load carrying element 7" is a central wire.

In addition, the power umbilical K₂ can include one or more low voltage electric wires 6', which is arranged in the cross section and extends in the longitudinal direction of the power umbilical. The low voltage wires 6' are placed separate from and external of the power cables 4'.

The bundle can optionally be kept together and in place by a strength band. An outer sheath or jacket 1', for example of polyethylene (PE), is extruded onto the bundle.

The outer, intermediate and inner channel elements 2', 2a', 3' are laying at least partly around and between the electric power cables 4' and are typically made as rigid, elongate, continuous elements of plastic material. The power cables 4', the possible wires/fibre optics conductors 5', 6', the channel elements 2', 2a', 3' and the at least one load carrying element 7', 7", are as mentioned alternating laid and closed, i.e. having steadily changing direction, in the entire or part of the longitudinal extension of the power umbilical K₂, alternatively continuously helical. In addition, the laid and closed bundle is kept substantially torsional stiff by the protective sheath 1', optionally by the addition of a strength band that is helically winded around the bundle immediate inside the protective sheath 1'.

As mentioned, the rigid elongate plastic elements 2', 2a', 3' are made of semiconducting plastic Also, the protective jacket 1' is made of semiconductive material.

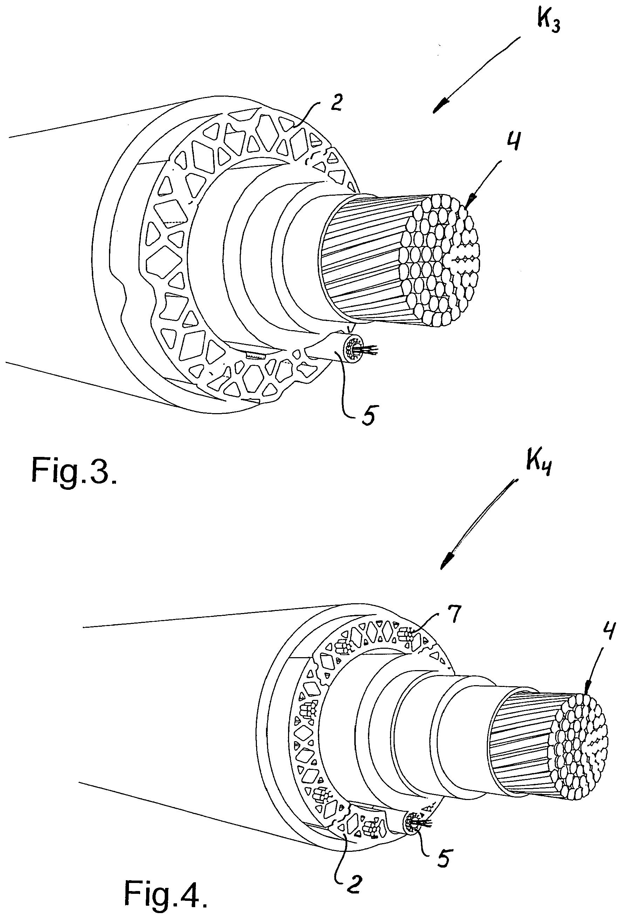

Fig. 3 shows a simple version of a DEH/piggyback power umbilical K₃. This is a single conductor power umbilical K₃ which is specially designed and prepared to be a DEH cable (Direct Electric Heating). The power umbilical K₃ is constructed of one single power cable 4 and a set of elongate profile elements 2 that are laid in a ring around the power cable 4. At least one of the profile elements is semiconductive. Several layers of insulation are present therebetween. However, the umbilical cannot have any metallic screen since this would influence on the inductive function of the umbilical. Also, a fibre optics conductor 5 is shown, but that is not absolutely mandatory, but may preferably be there. This is a fibre optic conductor that monitors the condition of the power umbilical K₃ and signalizes possible errors in that a temperature increase arises within the optical fibre. In a variant the at least one fibre optics element 5 can be arranged within the insulating layer itself that surrounds the power cable 4. Normally, in addition, such cable also has a magnetic connection to the pipe.

Fig. 4 shows a power umbilical K₄ The power umbilical K₄ is typically used during installation and repair. This is also a single conductor power umbilical K₄ which is prepared to be a DEH piggyback cable (Direct Electric Heating). The power umbilical K₄ is constructed corresponding to the power umbilical K₃, but with the addition of bundles assembled of carbon fibre rods 7 which represent load carrying elements. Axial strength is needed under retrofit installation on the seabed and during repair.

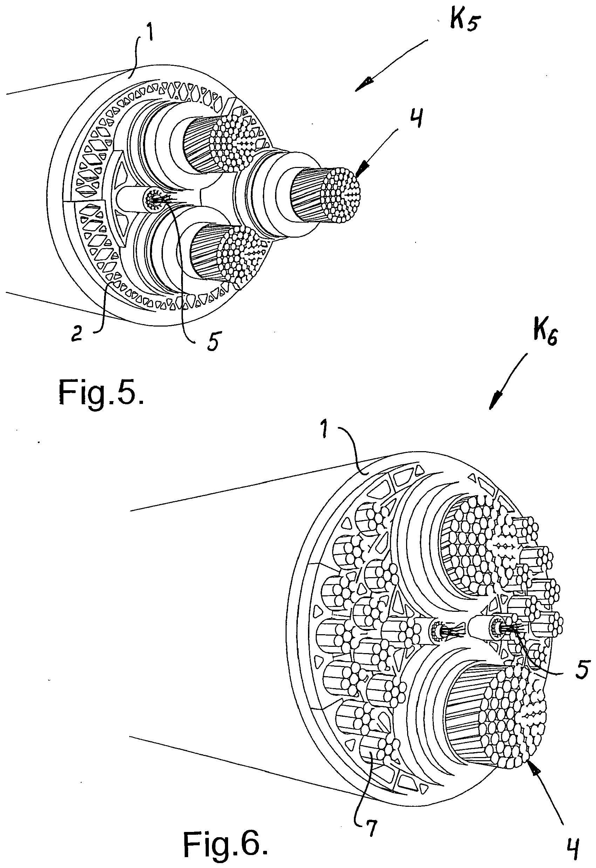

Fig. 5 shows a power umbilical K₅ in the form of a three conductor DEH power umbilical having three heavy gauge power cables 4, one or two fibre optics conductors 5, outer jacket 1 and the mentioned profile elements 2 which are adapted to this power umbilical K₅.

Fig. 6 shows a power umbilical K₆ in the form of a two conductor dynamic DEH power umbilical having two heavy gauge power cables 4, one or more fibre optics conductors 5, outer jacket 1, a great number of carbon fibre rods 7 and the mentioned profile elements 2 which are just adapted to this power umbilical K₆. The power umbilical K₆ is designed for particularly deep waters.

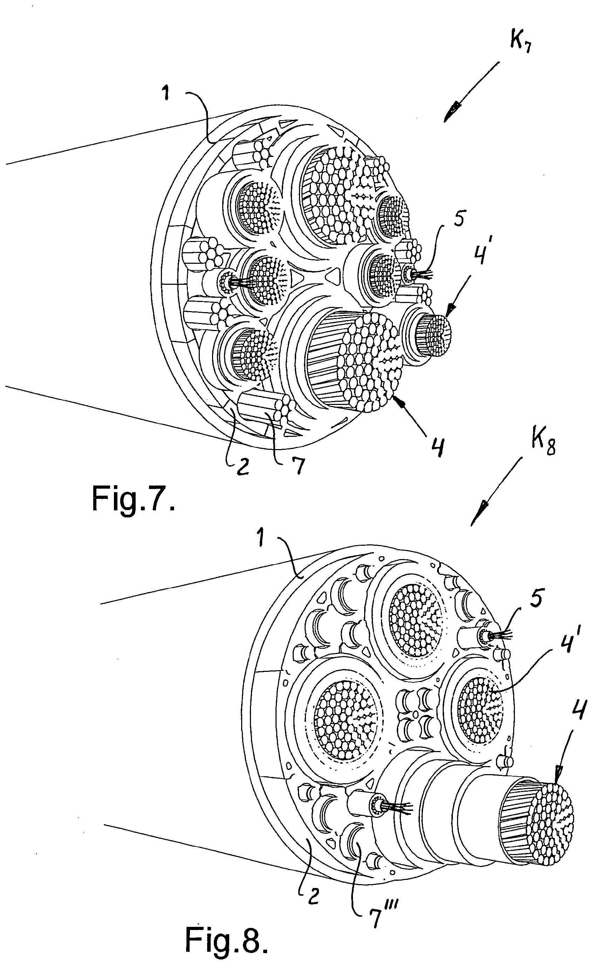

Fig. 7 shows a dynamic power umbilical K₇ in the form of a combined two conductor dynamic DEH power umbilical and six conductor high voltage cable for subsea equipment. The power umbilical K₇ includes two heavy gauge power cables 4, six high voltage cables 4', one or more fibre optics conductors 5, outer jacket 1, a great number of carbon fibre rods 7 and the mentioned profile elements 2 which are just adapted to this power umbilical K₇. The power umbilical K₇ is designed for combining a DEH function in the cable with power cables to subsea equipment such as pump stations.

Fig. 8 shows a power umbilical K₈ in the form of a twin conductor dynamic DEH power umbilical designed to be deployed in water depths less than about 1000 meters. The power umbilical K₈ includes four heavy gauge power cables 4, one or more fibre optics conductors 5, outer jacket 1, a great number of weight adding steel rods 7‴ having larger and smaller cross section and the mentioned profile elements 2 which are just fitted to this power umbilical K₈.

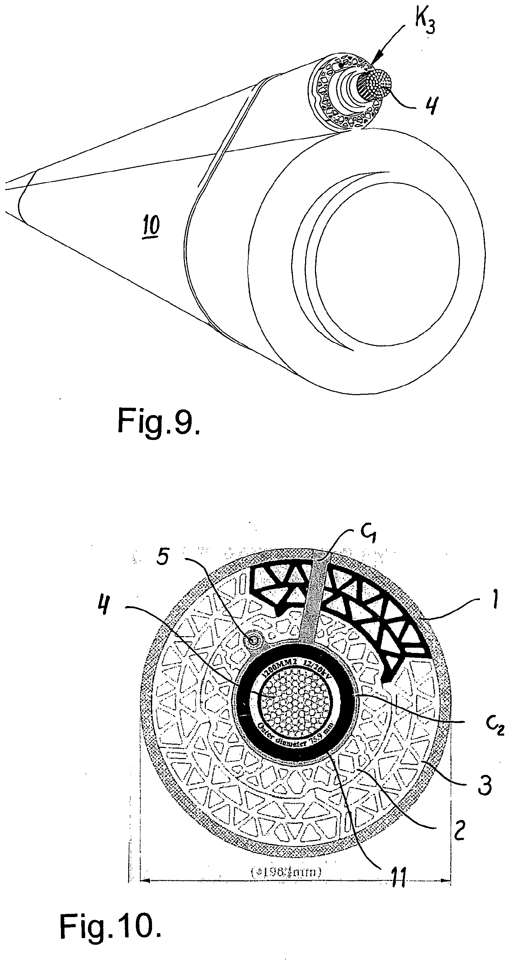

Fig. 9 shows a "piggyback" cable K₃ on a production pipe 10 in the way the cable K₃ typically is laid and strapped securely in a DEH heating system.

Fig. 10 shows schematically a section through a DEH cable according to the invention where a radially extending water channel C₁ is clearly marked and shown. The water channel C₁ can be a bore, for example a 10mm hole through the outer jacket 1, the profile elements 2, 3 and in towards the power cable 4 proper. It is further shown a channel C₂ between the outer sheath 11 of the power cable 4 and the inner wall of the profile elements 3. The thickness of the channel is indicated to be 3mm, without being a limitation. Thus, a channel C₂ is arranged in the entire longitudinal direction of the cable and interrupted by radial extending channels C₁ at certain intervals. Also, a fibre optics cable 5 is indicated.

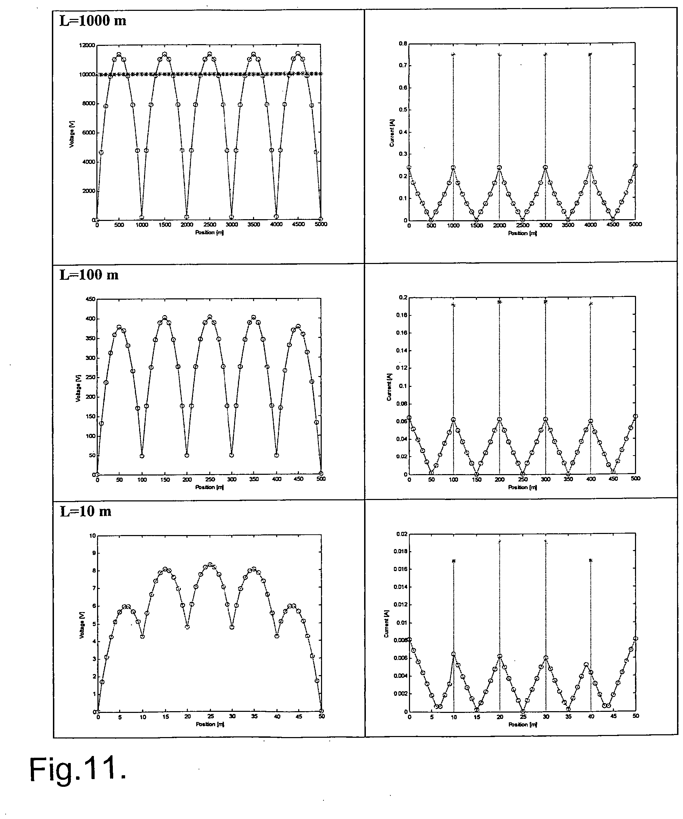

Fig. 11 shows schematically current and voltage diagrams for capacitive currents for different distances between the water channels C₁ in the longitudinal direction of the cable and without fibre optics conductor in the cross section thereof. The diagrams show the results when the water channels, or the draining holes C1, have a distance apart of 10, 100 and 1000 meters along the length of the power umbilical K. In the analysis that was conducted one observed the effect of the capacitive charging currents on the voltage built up along the outer semiconductive cable sheath 1 having 6 mm thickness. A cable voltage between the conductor and ground was 10kV at 50 Hz.

Fig. 12 shows another variant of a "piggyback" cable K₃ on a production pipe 10, i.e. having three cables mounted on and strapped securely to the production pipe 10 with approximately same circumferential distance apart from each other. The cables are distributed around the circumference in order to lower the operational temperature.

Fig. 13 shows schematically the electric current distribution within a DEH system. If the heating system, i.e. the entire system of pipes, connections and cables were electrically isolated from the seawater, all current from the distributors would be conducted in the steel pipe, which means optimum power efficiency for the system. However, from a practical point of view and over the lifetime of the system, it is not considered possible to keep the heating system ideally isolated from the seawater. Thus, an electric error due to ageing, or damage, on the insulation by accidence, results in large consequences for the safety and the reliability of the system.

## Claims

1. An integrated power umbilical (K), including at least one power cable (4) to transfer large amounts of electric energy/power, filler material (2, 3) in the form of stiff, elongated plastic elements, laying at least partly around and between the power cables (4), which are collectively collected into a twisted bundle by means of a laying and closing operation, and a protective sheath (1) that encapsulates the power cables (4) and the filler material (2, 3), and at least one additional metallic high ohm electric conductor is arranged in the transverse cross section of the high power umbilical and extends in the longitudinal direction of the power umbilical, which at least one electric conductor is located separate from and external of the high power cables, said at least one electric conductor being able to drain off, or dissipate, capacitive currents arising in the high power umbilical when conducting large amounts of electric energy/power,
**characterized in that** the surrounding elements, i.e. the filler material (2, 3) and the sheath (1), is made of a semiconducting material, said semiconducting material being able to drain off, or dissipate, capacitive currents arising in the power umbilical (K) when the power cable (4) conducts large amounts of electric energy/power, and that the stiff, elongate plastic elements (2, 3) include longitudinally extending channels (C₂) for receipt of seawater, and the protective outer sheath (1) comprises substantially radially extending channels (C₁) that communicate with the longitudinally extending channels (C₂), said seawater forming communication to transport away or dissipate capacitive currents generated in the power umbilical (K).

2. The integrated power umbilical (K) according to claim 1, **characterized in that** at least one of the stiff, elongate plastic elements (2, 3) and the protective outer sheath (1) are made of a semiconducting material, for example polyethylene (PE), polyvinylchloride (PVC), polypropylene (PP) and acrylonitrile butadiene styrene (ABS), all with the addition of carbon.

3. The integrated power umbilical (K) according to any of the claims 1-2, **characterized in that** at least one fibre optics conductor (5) is arranged in the power umbilical.

4. The integrated power umbilical (K) according to any of the claims 1-3, **characterized in that** the electric power cables (4), the filler material (2, 3) and the at least one electric conductor (8) are SZ laid and closed, i.e. are alternately laid and closed by continuously alternating direction, in the entire or part of the longitudinal extension of the power umbilical, combined with that the SZ laid and closed bundle is kept fixed substantially torsion stiff by the protective sheath (1).

5. The integrated power umbilical (K) according to any of the claims 1-3, **characterized in that** the electric power cables (4), the filler material (2, 3) and the at least one electric conductor (8) are laid and closed in a helix.

6. The integrated power umbilical (K) according to any of the claims 1-5, **characterized in that** the electric power cables (4) are three-phase cables, which three-phase cables are arranged in a triangle within the transverse cross section thereof, that are either in contact with each other or with the semiconductive profiles.

7. The integrated power umbilical (K) according to any of the claims 1-6, **characterized in that** the power umbilical (K) includes electric wires (6') and/or fibre optics conductors (5, 5') which also are laid and closed in a SZ configuration and are located internal of the outer sheath (1, 1'), alternatively laid and closed in a helix.

8. The integrated power umbilical (K) according to any of the claims 1-7, **characterized in that** at least one load carrying element (7, 7', 7") is predetermined located in the transverse cross section of the power umbilical (K), which element(s) (7, 7', 7") also is (are) laid and closed in a SZ configuration, alternatively laid and closed in a helix.

9. The integrated power umbilical (K) according to any of the claims 1-8, **characterized in that** the power umbilical includes an anti rotation band or strength band, or a tape, which is helically winded about the bundle just internal of the protective sheath (1, 1'), alternatively the strength band, or the tape, is helically winded around the bundle in two or more layers, laid and closed in opposite directions.

10. The integrated power umbilical (K) according to any of the claims 1-9, **characterized in that** the load carrying elements (7, 7', 7") are carbon fibre rods, steel threads, steel wire, or a combination of these.

11. The integrated power umbilical (K) according to any of the claims 1-10, **characterized in that** the power umbilical includes at least one fluid pipe (P₁, P₂) in its transverse cross section, said pipe being made of high ohm or nonconducting metal and/or plastic material, laid and closed in the same configuration as the other elements.

12. The integrated power umbilical (K) according to any of the claims 1-11, **characterized in that** the at least one fibre optics conductor (5) is arranged within the insulation layer that encapsulates the power cable (4).

13. The integrated power umbilical (K) according to any of the claims 1-12, **characterized in that** the at least one fibre optics conductor (5) is arranged within a longitudinally extending channel in the filler material (2, 3).

## Patentansprüche

1. Integriertes Stromversorgungskabel (K) mit mindestens einem Starkstromkabel (4) zur Übertragung großer Mengen an elektrischer Energie/Leistung, Füllmaterial (2, 3) in Form von steifen, länglichen Kunststoffelementen, das zumindest teilweise um und zwischen den Starkstromkabeln (4) liegt, die durch einen Verlege- und Schließvorgang zu einem verdrillten Bündel zusammengefasst sind, und einem Schutzmantel (1), der die Starkstromkabel (4) und das Füllmaterial (2, 3) einkapselt, und mindestens einem zusätzlichen metallischen hochohmigen elektrischen Leiter, der im Querschnitt des Stromversorgungskabels angeordnet ist und sich in Längsrichtung des Stromversorgungskabels erstreckt, der getrennt von den Starkstromkabeln und außerhalb dieser angeordnet ist, wobei der mindestens eine elektrische Leiter in der Lage ist, kapazitive Ströme, die im Stromversorgungskabel beim Leiten großer Mengen elektrischer Energie/Leistung entstehen, abzuleiten oder abzuführen,
**dadurch gekennzeichnet, dass**
die umgebenden Elemente, d.h. das Füllmaterial (2, 3) und der Schutzmantel (1), aus einem halbleitenden Material bestehen, wobei das halbleitende Material in der Lage ist, kapazitive Ströme, die in dem Stromversorgungskabel (K) entstehen, wenn das Starkstromkabel (4) große Mengen an elektrischer Energie/Leistung leitet, abzuleiten oder zu verteilen, und dass die steifen, länglichen Kunst stoffelemente (2, 3) in Längsrichtung verlaufende Kanäle (C₂) zur Aufnahme von Meerwasser aufweisen und der äußere Schutzmantel (1) im Wesentlichen radial verlaufende Kanäle (C₁) aufweist, die mit den in Längsrichtung verlaufenden Kanälen (C₂) in Verbindung stehen, wobei das Meerwasser eine Verbindung bildet, um in dem Stromversorgungskabel (K) erzeugte kapazitive Ströme abzutransportieren oder abzuführen.

2. Integriertes Stromversorgungskabel (K) nach Anspruch 1, **dadurch gekennzeichnet, dass** mindestens eines der steifen, langgestreckten Kunststoffelemente (2, 3) und der äußere Schutzmantel (1) aus einem halbleitenden Material bestehen, beispielsweise aus Polyethylen (PE), Polyvinylchlorid (PVC), Polypropylen (PP) und Acrylnitril-Butadien-Styrol (ABS), jeweils unter Zusatz von Kohlenstoff.

3. Integriertes Stromversorgungskabel (K) nach einem der Ansprüche 1 bis 3, **dadurch gekennzeichnet, dass** in dem Stromversorgungskabel mindestens ein Lichtwellenleiter (5) angeordnet ist.

4. Integriertes Stromversorgungskabel (K) nach einem der Ansprüche 1 bis 3, **dadurch gekennzeichnet, dass** die elektrischen Starkstromkabel (4), das Füllmaterial (2, 3) und der mindestens eine elektrische Leiter (8) in der gesamten oder einem Teil der Längserstreckung des Stromversorgungskabels abwechselnd SZ-förmig verlegt und geschlossen sind, d. h. in kontinuierlich abwechselnder Richtung verlegt und geschlossen sind, kombiniert damit, dass das SZ-förmig verlegte und geschlossene Bündel durch den Schutzmantel (1) im Wesentlichen torsionssteif fixiert gehalten ist.

5. Integriertes Stromversorgungskabel (K) nach einem der Ansprüche 1 bis 3, **dadurch gekennzeichnet, dass** die Starkstromkabel (4), das Füllmaterial (2, 3) und der mindestens eine elektrische Leiter (8) wendeiförmig verlegt und geschlossen sind.

6. Integriertes Stromversorgungskabel (K) nach einem der Ansprüche 1 bis 5, **dadurch gekennzeichnet, dass** die Starkstromkabel (4) dreiphasig sind, wobei die dreiphasigen Kabel in ihrem Querschnitt in einem Dreieck angeordnet sind, das entweder miteinander oder mit den Halbleiterprofilen in Kontakt steht.

7. Integriertes Stromversorgungskabel (K) nach einem der Ansprüche 1 bis 6, **dadurch gekennzeichnet, dass** das Stromversorgungskabel (K) elektrische Drähte (6') und/oder Lichtwellenleiter (5, 5') enthält, die ebenfalls in einer SZ-Konfiguration verlegt und geschlossen sind und sich innerhalb des äußeren Schutzmantels (1, 1') befinden und alternativ in einer Helix verlegt und geschlossen sind.

8. Integriertes Stromversorgungskabel (K) nach einem der Ansprüche 1 bis 7, **dadurch gekennzeichnet, dass** im Querschnitt des Stromversorgungskabels (K) mindestens ein lasttragendes Element (7, 7', 7") vorgegeben ist, wobei das oder die Elemente (7, 7', 7") auch SZ-förmig, alternativ wendeiförmig verlegt und geschlossen ist bzw. sind.

9. Integriertes Stromversorgungskabel (K) nach einem der Ansprüche 1 bis 8, **dadurch gekennzeichnet, dass** das Stromversorgungskabel ein Antirotationsband oder ein Verstärkungsband oder ein Band umfasst, das schraubenförmig um das Bündel direkt innerhalb des Schutzmantels (1, 1') gewickelt ist, oder dass das Verstärkungsband oder das Band schraubenförmig um das Bündel in zwei oder mehr Schichten gewickelt ist, die in entgegengesetzten Richtungen verlegt und geschlossen sind.

10. Integriertes Stromversorgungskabel (K) nach einem der Ansprüche 1 bis 9, **dadurch gekennzeichnet, dass** die lasttragenden Elemente (7, 7', 7") Kohlefaserstäbe, Stahlfäden, Stahldraht oder eine Kombination davon sind.

11. Integriertes Stromversorgungskabel (K) nach einem der Ansprüche 1 bis 10, **dadurch gekennzeichnet, dass** das Stromversorgungskabel in seinem Querschnitt mindestens ein Flüssigkeitsrohr (P₁, P₂) aufweist, das aus hochohmigem oder nichtleitendem Metall und/oder Kunststoff besteht und in derselben Anordnung wie die anderen Elemente verlegt und verschlossen ist.

12. Integriertes Stromversorgungskabel (K) nach einem der Ansprüche 1 bis 11, **dadurch gekennzeichnet, dass** der mindestens eine Lichtwellenleiter (5) innerhalb der Isolierschicht angeordnet ist, die das Stromversorgungskabel (4) umhüllt.

13. Integriertes Stromversorgungskabel (K) nach einem der Ansprüche 1 bis 12, **dadurch gekennzeichnet, dass** der mindestens eine Lichtwellenleiter (5) in einem längs verlaufenden Kanal im Füllmaterial (2, 3) angeordnet ist.

## Revendications

1. Câble ombilical d'alimentation intégré (K), incluant au moins un câble d'alimentation (4) pour transférer de grandes quantités d'énergie/puissance électrique, un matériau de remplissage (2, 3) sous la forme d'éléments en plastique allongés rigides, disposés au moins en partie autour et entre les câbles d'alimentation (4), qui sont collectivement rassemblés en un faisceau torsadé au moyen d'une opération de disposition et de fermeture, et une gaine de protection (1) qui encapsule les câbles d'alimentation (4) et le matériau de remplissage (2, 3), et au moins un conducteur électrique métallique supplémentaire à valeur ohmique élevé est agencé dans la section transversale du câble ombilical d'alimentation et s'étend dans la direction longitudinale du câble ombilical d'alimentation, lequel au moins un conducteur électrique est situé séparément des câbles haute puissance et à l'extérieur de ceux-ci, ledit au moins un conducteur électrique étant capable de drainer ou de dissiper des courants capacitifs apparaissant dans le câble ombilical haute puissance lorsqu'il conduit de grandes quantités d'énergie/puissance électrique,
**caractérisé en ce que** les éléments environnants, à savoir le matériau de remplissage (2, 3) et la gaine (1), sont constitués d'un matériau semi-conducteur, ledit matériau semi-conducteur étant capable de drainer ou de dissiper des courants capacitifs apparaissant dans le câble ombilical d'alimentation (K) lorsque le câble d'alimentation (4) conduit de grandes quantités d'énergie électrique/de puissance, et **en ce que** les éléments en plastique allongés rigides (2, 3) comprennent des canaux s'étendant longitudinalement (C₂) pour recevoir de l'eau de mer, et la gaine extérieure de protection (1) comprend des canaux s'étendant sensiblement radialement (C₁) qui communiquent avec les canaux s'étendant longitudinalement (C₂), ladite eau de mer formant une communication pour transporter ou dissiper des courants capacitifs générés dans le câble ombilical d'alimentation (K).

2. Câble ombilical d'alimentation intégré (K) selon la revendication 1, **caractérisé en ce qu'**au moins l'un des éléments en matière plastique allongés rigides (2, 3) et la gaine extérieure de protection (1) sont constitués d'un matériau semi-conducteur, par exemple du polyéthylène (PE), du polychlorure de vinyle (PVC), du polypropylène (PP) et de l'acrylonitrile-butadiène-styrène (ABS), le tout avec addition de carbone.

3. Câble ombilical d'alimentation intégré (K) selon l'une quelconque des revendications 1 et 2, **caractérisé en ce qu'**au moins un conducteur à fibre optique (5) est agencé dans le câble ombilical d'alimentation.

4. Câble ombilical d'alimentation intégré (K) selon l'une quelconque des revendications 1 à 3, **caractérisé en ce que** les câbles d'alimentation électrique (4), le matériau de remplissage (2, 3) et le au moins un conducteur électrique (8) sont disposés et fermés en SZ, c'est-à-dire sont disposés et fermés en alternance par une direction alternée continue, dans la totalité ou une partie de l'extension longitudinale du câble ombilical d'alimentation, en combinaison avec le faisceau disposé et fermé en SZ qui est maintenu fixé sensiblement rigide en torsion par la gaine de protection (1).

5. Câble ombilical d'alimentation intégré (K) selon l'une quelconque des revendications 1 à 3, **caractérisé en ce que** les câbles d'alimentation électrique (4), le matériau de remplissage (2, 3) et le au moins un conducteur électrique (8) sont disposés et fermés en une hélice.

6. Câble ombilical d'alimentation intégré (K) selon l'une quelconque des revendications 1 à 5, **caractérisé en ce que** les câbles d'alimentation électrique (4) sont des câbles triphasés, lesquels câbles triphasés sont agencés en un triangle à l'intérieur de la section transversale de ceux-ci, qui sont soit en contact les uns avec les autres, soit avec les profils semi-conducteurs.

7. Câble ombilical d'alimentation intégré (K) selon l'une quelconque des revendications 1 à 6, **caractérisé en ce que** le câble ombilical d'alimentation (K) comprend des fils électriques (6') et/ou des conducteurs à fibre optiques (5, 5') qui sont également disposés et fermés dans une configuration SZ et sont situés à l'intérieur de la gaine extérieure (1, 1'), disposés et fermés en alternance en une hélice.

8. Câble ombilical d'alimentation intégré (K) selon l'une quelconque des revendications 1 à 7, **caractérisé en ce qu'**au moins un élément de support de charge (7, 7', 7") est prédéterminé situé dans la section transversale du câble ombilical d'alimentation (K), lequel (lesquels) élément (s) (7, 7', 7") est (sont) également disposé(s) et fermé(s) dans une configuration SZ, alternativement disposé(s) et fermé(s) en une hélice.

9. Câble ombilical d'alimentation intégré (K) selon l'une quelconque des revendications 1 à 8, **caractérisé en ce que** le câble ombilical d'alimentation comprend une bande antirotation ou une bande de résistance, ou un ruban, qui est enroulé(e) de manière hélicoïdale autour du faisceau juste à l'intérieur de la gaine de protection (1, 1'), en variante la bande de résistance, ou la bande, est enroulé(e) de manière hélicoïdale autour du faisceau en deux couches ou plus, disposées et fermées dans des directions opposées.

10. Câble ombilical d'alimentation intégré (K) selon l'une quelconque des revendications 1 à 9, **caractérisé en ce que** les éléments de support de charge (7, 7', 7") sont des tiges de fibre de carbone, des fils d'acier, un fil d'acier ou une combinaison de ceux-ci.

11. Câble ombilical d'alimentation intégré (K) selon l'une quelconque des revendications 1 à 10, **caractérisé en ce que** le câble ombilical d'alimentation comprend au moins un tuyau de fluide (P₁, P₂) dans sa section transversale, ledit tuyau étant constitué d'un matériau métallique et/ou plastique à haute valeur ohmique ou non conducteur, disposé et fermé dans la même configuration que les autres éléments.

12. Câble ombilical d'alimentation intégré (K) selon l'une quelconque des revendications 1 à 11, **caractérisé en ce que** le au moins un conducteur à fibre optique (5) est agencé à l'intérieur de la couche d'isolation qui encapsule le câble d'alimentation (4).

13. Câble ombilical d'alimentation intégré (K) selon l'une quelconque des revendications 1 à 12, **caractérisé en ce que** le au moins un conducteur à fibre optique (5) est agencé à l'intérieur d'un canal s'étendant longitudinalement dans le matériau de remplissage (2, 3).
